Europäisches Patentamt

European Patent Office

Office européen des brevets

(19)

(11) Publication number: **0 427 692 A2**

# EUROPEAN PATENT APPLICATION

(21) Application number: 90850368.3

(22) Date of filing: 09.11.90

(51) Int. Cl.⁵: **G01B 11/00**

(30) Priority: 09.11.89 SE 8903767

(43) Date of publication of application:
**15.05.91 Bulletin 91/20**

(84) Designated Contracting States:
**CH DE FR GB LI**

(71) Applicant: **C.E. JOHANSSON AB**

**S-631 81 Eskilstuna(SE)**

(72) Inventor: **Ahlen, Hans**

Björkvägen 21
S 191 44 Sollentuna(SE)
Inventor: **Ek, Leif**
**Trollesundsväg 149**
**S-124 39 Bandhagen(SE)**
Inventor: **Andersson, Bengt-Göran**
**Majvägen 5**
**S-191 40 Sollentuna(SE)**

(74) Representative: **Örtenblad, Bertil Tore**
**Noréns Patentbyra AB Box 27034**
**S-102 51 Stockholm(SE)**

(54) **A contactless measuring probe.**

(57) A contactless distance measuring probe of the kind used, inter alia, in so-called coordinate measuring machines, and comprises a lens system having an objective and a light source arranged to transmit light onto a point on a measurement object through the lens system, wherein the lens system is intended to focus this point on the measurement object and wherein the measurement probe includes a focus detecting means which is intended to receive light arriving from the aforementioned point subsequent to passing through the lens system, and is intended to detect when the transmitted light is focused on the surface of said object. The invention is characterized in that the light source (40) and the focus detecting means (15) are included in a detector unit (61); in that an optical unit (81, 82) which is small and light in weight in relation to the lens system (7) is arranged for movement in a direction towards and away from the objective (8) of the lens system, the unit thereby functioning to change the distance of the focus point from the objective; and in that a measuring means (16), such as a scale, is provided for measuring the position of the movable optical unit (81; 82) in relation to the lens system (7) when the focus detecting means (15) detects that the transmitted light is focused on the surface of the measurement object, this position constituting a measurement of the distance (c) between the aforementioned point (13) on the measurement object and the objective (8).

Fig. 4a

EP 0 427 692 A2

# A CONTACTLESS MEASURING PROBE

The present invention relates to a contactless distance measuring probe of the kind used, inter alia, in so-called coordinate measuring machines.

Such machines are used to measure or determine the shape of an object, wherewith a large number of points on the object are measured with respect to their position in a three-dimensional coordinate system defined by the machine. A coordinate measuring machine has a measuring head which can be moved rectilinearly in three mutually perpendicular directions. The measuring head carries a measuring probe whose position relative to the surface of the object is determined.

These measuring probes are normally mechanical and functions to produce an electrical signal when coming into contact with the surface of the objectbeing measured. When contact occurs, the position of the measuring head, and therewith the position of the measuring probe in space, is read-off. One drawback with mechanical measuring probes is that with each measuring process, it is necessary to advance and position the probe until it makes contact with the surface of the object, and then withdraw the probe. Consequently, each measuring process will take a relatively long time to carry out. Furthermore, the measuring probe must be extremely precise from a mechanical aspect.

Another problem occurs when measuring surfaces which are freely positioned in space, i.e. are not parallel with at least two of the axes in the machine coordinate system. In such cases, not-readily controlled measuring conditions will occur as a result of the contact angle between the spherical measuring tip of the probe and the surface in question. Furthermore, the force components of the measuring force, and therewith the magnitude of elastic restoration, are dependent on the contact angle.

Various types of optical measuring probes intended to eliminate the aforesaid problems are known to the art.

The most colon method applied in optical measuring processes is the triangulation method.

Other methods are based on focusing the light on the surface to be measured with the aid, for instance, of astigmatic lenses which produce a focus in the form of a line oblique in space, or a chromatic focus in which light of mutually different wavelengths is focused in different planes.

A common feature of the aforedescribed methods is that they either have poor resolution and accuracy, or a small measuring area, or a short working distance.

A third method of measuring the surface is the dynamic focusing method. In this method, a lens is caused to take a position such as to focus a light beam on the surface to be measured. The position of the lens is therewith representative of the position of the surface relative to the system. Although this method is very accurate, the working area is very small and the working distance is short.

One of the problems with dynamic focusing is that a long working distance requires a lens of large diameter and therewith large mass. Furthermore, the large working distance requires large focusing movement. When the lens elements are moved rapidly, in acceleration and retardation, the mass forces are of such magnitude as to affect the mechanical parts of the coordinate measuring machine and deleteriously influence the measuring result. Consequently, the time taken to move the focus position between different locations within the working area become troublesomely long, since a large number of points are to be measured.

Consequently, there is a desire to obtain a measuring probe which will provide an extremely accurate result and which will also enable measuring processes to be carried out quickly.

The present invention relates to such a measuring probe.

The present invention describes a dynamic focusing system having a large working range and a long working distance.

Accordingly, the present invention relates to a contactless distance measuring probe of the kind used, inter alia, in so-called coordinate measuring machines, and comprises a lens system having an objective and a light source arranged to transmit light onto a point on a measurement object through said lens system, wherein the lens system is intended to focus said point on the measurement object, and wherein the measurement probe includes a focus detecting means which is intended to receive light arriving from said point subsequent to passing through the lens system, and is intended to detect when the transmitted light is focused on the surface of said object; and is characterized in that the light source and the focus detecting means are included in a detector unit; in that an optical unit which is small and light in weight in relation to the lens system is arranged for movement in a direction towards and away from the objective of said lens system, said unit thereby functioning to change the distance of the focus point from said objective; and in that a measuring means, such as a scale, is provided for measuring the position of the movable optical unit in relation to the lens system when the focus detecting means (15) detects that the transmitted light is focused on the surface of the measurement object, said position constituting a measurement of the distance (c) between said point (13) on the measurement object and the objective (8).

The invention will now be described in more detail with reference to an exemplifying embodiment thereof and also with reference to the accompanying drawings, in which

- Figure 1 illustrates schematically a coordinate measuring machine having a measuring head;
- Figure 2 illustrates part of the measuring head in larger scale;
- Figure 3 is a block schematic illustrating a controlling and measuring system;
- Figures 4a, 4b and 4c illustrates respectively a lens system included in the measuring head and illustrate the formation of two light fields in accordance with a first, a second and a third embodiment of the lens system;
- Figures 5a-5c illustrate the reception of two light fields in the vicinity of a detector unit;
- Figure 6 illustrates a beam path where focus is located at different distances from the optical axis of the lens system;

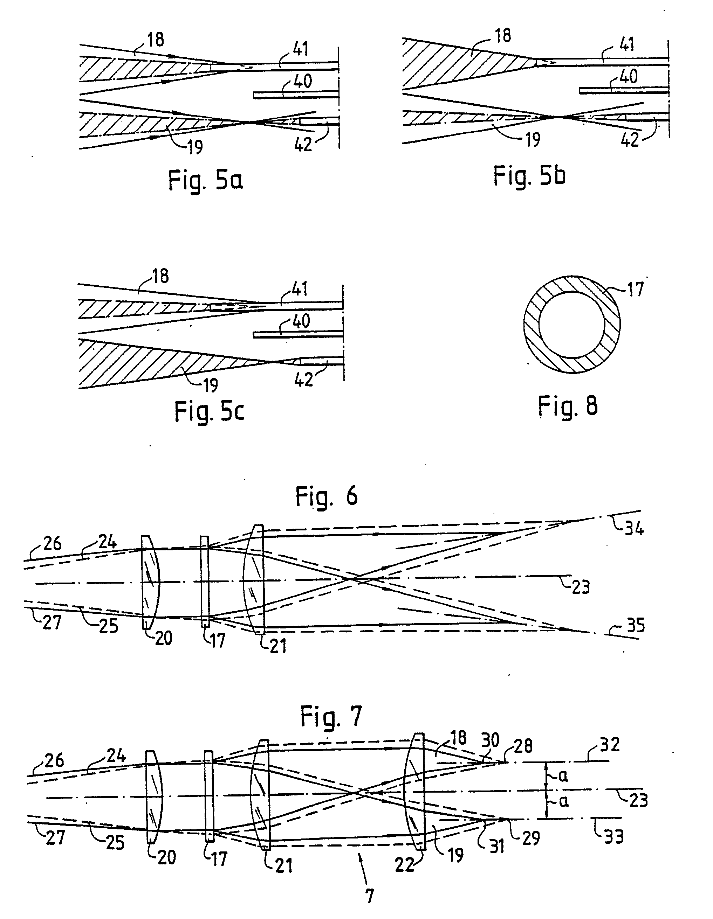

- Figure 5 illustrates a beam path according to the invention where focus is located at a constant distance from the optical axis of the lens system; and
- Figure 8 illustrates a grating included in the lens system.

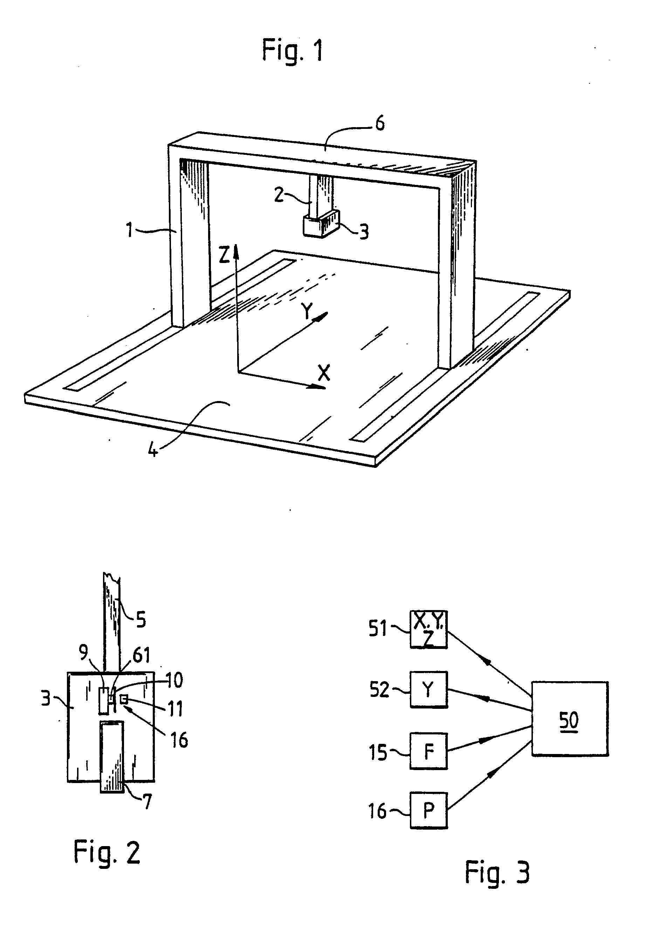

Figure 1 illustrates schematicaly a coordinate measuring machine which has a portal 1 which is movable in the Y-direction and a carriage 2 which is movable in the X-direction along a portal cross-member. Suspended from the carriage 2 is a measuring head 3 which is movable in the Z-direction relative to the carriage 2. Such a machine is well known in the art. An object to be measured-up is positioned on the table 4 of the machine. The machine seeks and finds the surface of the object in a predetermined manner and then follows the surface of the object in a predetermined manner and therewith determines the positions of a very large number of points on said surface in relation to a coordinate system. This procedure is also a known technique.

Figure 2 illustrates the measuring head in larger scale. The head is carried by a rod 5 or like device which extends between the head and the portal 6.

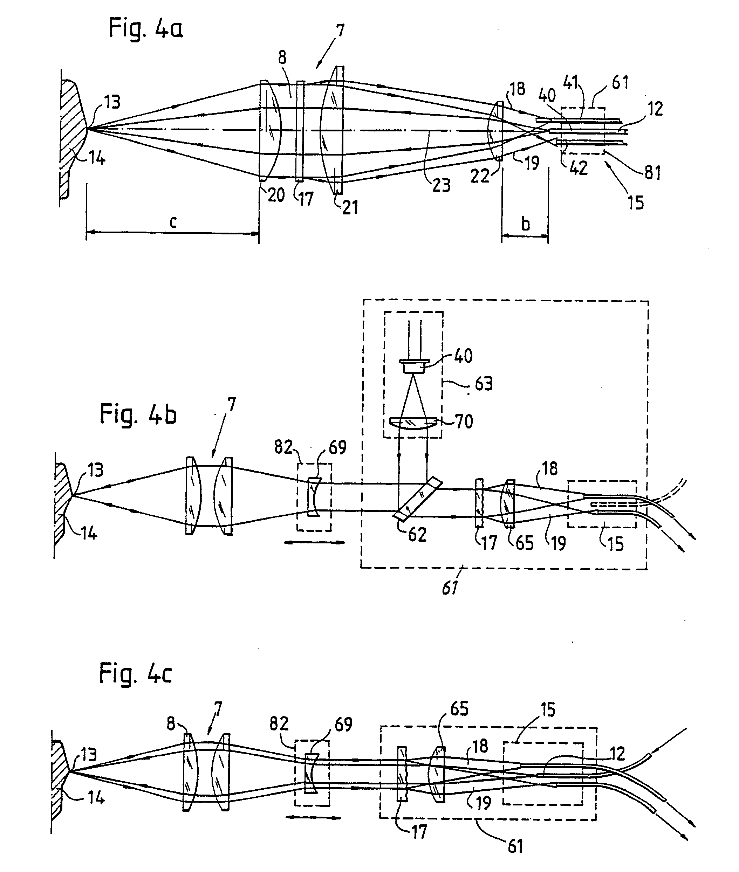

The present invention relates to the actual probe itself, which is an optical probe. The measuring probe is illustrated in Figures 2 and 4, and includes a lens system 7 having an objective 8, an optical detector unit 61 and a lightweight optical unit 81 which is movable in relation to the objective 8 of the lens system. Also provided is a device 9 for moving the optical unit 81 in a direction towards and away from the objective of said lens system 7.

The device 9 may be of any suitable kind, and preferably includes electromechanical elements.

The measuring probe also includes a measuring device 16 which includes a scale 10 and a detecting means 11 which coacts with the scale in a manner to determine the position of the optical unit 81 in relation to the lens system. The measuring device 6 may, for instance, comprise a capacitive position indicator. The measuring device may alternatively comprise an inductive indicator.

By objective 8 is meant the relatively heavy lens necessary for obtaining a long working distance.

As will be seen from Figures 4a-4c, the probe also includes a light source 12, which is intended to transmit light onto a point 13 on an object 14 to be measured, via the lens system 7. The lens system is intended to focus said point on the measurement object. The probe also includes a focus detecting means 15, which is intended to receive light arriving from said point subsequent to passing through the lens system, and is intended to detect when the transmitted light is focused on the surface of said object. The aforesaid optical detector unit includes the focus detecting means 15.

According to the invention, the measuring probe includes a lightweight optical unit 81; 82 which is movable in a direction towards and away from the lens system 7. The measuring device 16 is intended to measure the position of the movable optical unit in relation to the lens system 7 when the focus detecting means 15 detects that transmitted light is focused on the surface of the measurement object, this position forming a measurement of the distance c between said point 13 on the measurement object and the objective 8.

According to one preferred embodiment of the invention, the lens system includes a grating 17 which functions to divide the light incident on the measurement object into two or more light fields 18, 19, see Figures 4a-4c. One or more lenses in the lens system 7 is/are operative to focus the light fields 18, 19 onto the focus detecting means 15.

The grating 17 will advantageously have the form illustrated in Figure 8, namely the form of an annular transmission grating on a transparent substrate. The grating is suitably produced with the aid of holographic techniques in a known manner.

In the embodiment illustrated in Figure 4a, the detector unit 61 is integrated with the movable unit 81. In this embodiment, the lens system includes two plane-convex lens elements 20, 21 with the grating 17 placed therebetween.

According to one highly preferred embodiment of the invention, the lens system includes a further lens element 22, which is located nearest the detector unit 61. The focal distance of the lens element 22 is such that subsequent to defraction in the lens element, the focus of respective light fields will lie at a constant distance from the optical axis 23 of the system, where mutually different distances between detector unit and lens element prevail. This is achieved in that the lens element has a focal distance which corresponds to the distance between the lens element 22 and the grating 17.

This relationship is illustrated in Figure 7. The beams 24, 25 illustrate light arriving from a point on the measurement object when a given distance prevails between the lens system and said object. These beams are shown in broken lines. The beams 26, 27 illustrate light arriving from the same point on the object, but with a greater distance between the lens system and said object. These beams are shown in full lines. Subsequent to dividing incident light into two light fields with the aid of the grating, the beams are defracted in the lens element to one focus point for each light field. The focus points of beams 24, 25 are referenced 28 and 29 respectively. The focus points of beams 26, 27 are referenced 30 and 31 respectively. All of these focus points 28-31 are located at the same distance a from the optical axis 23 of the lens system. Thus, when the distance between the lens system and the measurement object is changed, the focus points will be moved towards and away from the lens element 23, along the chain lines 32, 33.

The distance b between the focus detecting means 15 and the lens element 22 is a direct measurement of the distance c between the lens system and the measurement object. As a result of the aforesaid features, which cause the focus points to move along the lines 32, 33, the light sensitive element of the focus detecting device can be fixedly positioned relative to one another.

Figure 6 illustrates what will occur when the lens element 22 is not used. In Figure 6, beams which correspond to the beams in Figure 7 have the same reference signs. It will be seen from Figure 6 that the focus points of the two light fields move along the chain lines 34, 35 when the distance between the lens system and the measurement object changes. These lines 34, 35 form an angle with one another, which would require the focus detecting device to have a complicated construction.

In the embodiments illustrated in Figures 4b and 4c, which illustrate alternative optical solutions, the movable optical unit 82 includes a collimating optical element 69. In the case of these embodiments, the detector unit 61 is positioned in the path of the collimated beam, downstream of the movable unit 82.

Figure 4b illustrates a second embodiment in which the detector unit 61 includes a beam splitter 62, which separates the incoming light from the outgoing light. Light from the light source 12 is collimated by the lens 17, angled in towards the movable unit 82 by the beam splitter 62, and focused onto the measurement object by the lens system 7. Part of the light reflected back by the object impinges, via the lens system 7, on the lens 69, the beam splitter 62 and the grating 17, which divides the incident light into two or more light fields 18, 19. These light fields are focused onto the focus detecting means 15 by the lens element 65.

Figure 4c illustrates a third embodiment in which the light transmitting element 40 is incorporated in the focus detecting means 15. The light transmitted by the element 40 is collimated by a lens 65 and impinges the grating-free part of the grating 17. In remaining aspects, the beam path is analogous with that described above, namely that the light is focused onto the measurement object 14 by the lens system 7 and that subsequent to passing the lens system and the lens 69, the reflected light impinges on the grating 17 and is split thereby into two or more light fields. These light fields are focused onto the focus detecting means 15 by the lens element 65.

Figures 5a-5c illustrate the manner of operation of the focus detecting means 15. The focus detecting means 15 includes a light sensitive element for each of the light fields 18, 19.

According to one preferred embodiment, the light transmitting element of the detector unit 16, and/or the light receiving element 41, 42 of the focus detecting means comprise optical fibres. The other end of the light transmitting fibre is therewith connected to a light source, such as a laser diode. The respective other ends of the light receiving element 41, 42 are connected to light sensitive elements, such as photodetectors.

Referring to Figure 4a, the light from the fibre 40 is collimated by the lenses 22 and 21 and is then focused onto the surface of the measurement object by the lens 20. Part of the light reflected back by said surface is collected by the lens 20. The grating 17 divides the light into two or more light fields, which are focused onto the ends of the fibres 41, 42 of the focus detecting means, by the lenses 21 and 22.

Figures 5a-5c show only the front part of the movable unit 81; 82.

A first, 41, of the light sensitive elements is placed closer to the lens system 7 than said light source, which consists of the free end of the fibre 40, whereas the other, 42, of the light sensitive elements is placed correspondingly further away from the lens system 7. Consequently, different quantities of light will impinge on the fibres 41, 42 when the focus point does not lie in the same plane as the end of the light transmitting fibre 40. The hatched areas in Figures 5a-Sc illustrate light that impinges on the fibres 41, 42.

In Figure 5a, the surface of the measurement object is in focus, whereby both fibres 41, 42 collect an equal quantity of light. In Figure 5b, the surface is behind focus, wherewith the fibre 41 collects more light than the fibre 42. When the surface is in front of focus, as illustrated in Figure Sc, the fibre 42 will collect more light than the fibre 41. It is possible to determine whether the surface of the measurement object is located in focus, behind focus or in front of focus, by determining the amount of light received by the fibres 41, 42.

Each of the light sensitive elements is intended to emit a respective electric signal. According to one preferred embodiment, there is provided an electronic circuit constructed to calculate the difference signal divided by the summation signal, which expression provides a measurement of the distance of the focus detecting means from the position in which it is in focus.

The light transmitting fibre 40 is preferably a single mode fibre having an appropriately large numeric aperture, so that the whole or practically the whole of the grating-free part of the grating will be illuminated.

That part of the light which is reflected back and impinges on the grating-free part of the grating will not impinge on the light receiving fibres 41, 42. This is of minor significance, however, since the positional information relating to the position of the detector unit in relation to focus is found in the light which impinges on and is transmitted through the grating-containing outer ring of the grating annulus.

The use of optical fibres has been mentioned in the aforegoing. According to one alternative, not shown, the light transmitting and/or the light receiving element of the detector unit and the focus detecting means respectively may consist of one or more discrete or integrated semiconductor elements. In this case, the circuit or circuits is/are positioned so that their respective light transmitting and light sensitive elements are located at mutually the same positions as those stated above with respect to the free ends of the fibres 40, 41 and 42.

According to one preferred embodiment, the light source is constructed to transmit laser light, even though light of other wavelengths can be used.

The lens system illustrated in the Figures of the accompanying drawings has been shown as having only a few lenses. This has been done for reasons of clarity, however. In practice, one or more of the illustrated lenses will in reality include two or more lenses, so as to achieve good optical qualities. The present invention is therefore not limited to any particular lens system configuration, but rather that the lens system shall be constructed to provide the aforesaid optical properties.

According to one preferred embodiment, one or more of the optical elements are of the holographic type.

The inventive arrangement is connected to a control circuit, such as a processor 50. the processor has connected thereto an activating or controlling means 51, by means of which motors in the coordinate measuring machine are activated and controlled so that the measuring head will be brought to a desired position. These control circuits and activating and controlling devices are known to the art, and will therefore not be described in detail here.

The focus detecting means 15 is also connected to the control circuit, through a circuit F. This circuit is intended to receive the electrical signals arriving from the light sensitive elements at said fibre ends, said signals corresponding to the amount of light impinging on respective fibres. The circuit F is constructed to deliver a measurement signal to the control circuit 50, suitably by calculating the difference signal divided by the summation signal, said measurement signal being a measurement of the deviation between the true position of the movable unit 81; 82 and the position in which the fibres receive mutually the same amount of light, i.e. a position in which the surface of the measurement object is in focus on the detector unit.

The control circuit 50 is intended to control a second activating or controlling means 52, referenced Y in Figure 3, which is intended to control an electromechanical device of suitable known kind such that the movable unit is located in said focus position in which the working range of the measuring probe is exceeded.

The control circuit also includes the aforesaid measuring device 16, including a scale 10 and a sensing device 11 which coacts with the scale. This device 16 is connected to measure the position of the movable optical unit in relation to the lens system. The measuring device is referenced P in Figure 3. As explained in the aforegoing, the position of the movable unit in relation to the lens system is a measurement of the distance c between the lens system and the surface of the object being measured. This information, i.e. the distance c, together with information concerning the position of the measuring head in the a-system of the coordinate measuring machine, discloses the exact position of the illuminated measurement point in said XYZ-system. Devices and systems for determining the position of the measuring head in said XYZ-system are well known to the art, and will not therefore be described in more detail here.

When wishing to measure-up or determine the surface contours of an object, the object is placed on the table 4. The measuring head of the coordinate measuring machine may, for instance, be moved to a determined starting point on the object, or alternatively can be guided by a control processor or the like to a starting point on said object. The machine then measures or determines the respective position of a large number of points on the object, in accordance with instructions as to how the object shall be measured-up. These instructions are programmed in the processor, in a known manner.

Each of said points may be measured in accordance with one of two methods. In the first of these methods, subsequent to measuring a point on said object, the measuring head is moved through a given distance relative to the object, whereafter the movable unit is moved relative to the lens system until the measurement surface is in focus on the detector unit. The position of the point is established and the procedure repeated. In this case, the whole of the measuring head is moved in the Z-direction in Figure 1 only when the length of stroke of the movable unit in relation to the lens system is insufficient for the measurement surface to come into focus on the detector unit.

Thus, a plurality of discrete points are measured when applying this measuring principle.

When applying the other of said methods, measurement can be effected continuously. In this case, the measuring procedure is commenced subsequent to having placed a measuring point in focus on the detector unit. The measuring head is then moved continuously in the XY-plane in Figure 1, whereas the position of the movable unit is changed continuously so that the surface of the object will constantly be in focus on the detector unit. In this case, a continuous or substantially continuous signal relating to the position of the movable unit is delivered from the measuring device 16 to the processor 50. Naturally, when applying this method, it may be necessary to move the measuring head in the Z-direction in Figure 1, in order to bring the surface of the object in focus on the detector unit.

The positions of respective measured points are stored in a memory for further processing, this processing depending on the purpose for which the object is measured.

In all of the above-described embodiments of the focus detecting means, the two light receiving fibres are placed on opposite sides of the optical axis, i.e. symmetrically with respect to said axis. According to a preferred embodiment, one or more focus detecting means may be positioned radially outside the focus detecting means positioned symmetrically with respect to said optical axis. This construction enables several points on the measurement object to be detected simultaneously.

It will be obvious from the aforegoing that the movable unit can be made very light in weight and caused to move rapidly. According to one embodiment, the movable unit need only include three light fibres with associated holders. Because the movable part can be made light in weight, it can be permitted to move very rapidly without influencing the measuring result, as mentioned in the introduction. The heavier lens need only be moved in the Z-direction when the length of working stroke of the detector unit is insufficient, as explained the aforegoing. Movement of the heavier lens can therefore be permitted to take place relatively slowly.

The present invention has been described in the aforegoing with reference to a few exemplifying embodiments thereof. It will be obvious, however, that both the optic and control circuits can be changed and modified by the person skilled in this art, and that the invention is not restricted to the aforesaid field of application.

The present invention shall not therefore be considered limited to the described and illustrated embodiments thereof, since modifications can be made within the scope of the following Claims.

## Claims

1. A contactless distance measuring probe of the kind used, inter alia, in so-called coordinate measuring machines, and comprises a lens system having an objective and a light source arranged to transmit light onto a point on a measurement object through said lens system, wherein the lens system is intended to focus said point on the measurement object and wherein the measurement probe includes a focus detecting means which is intended to receive light arriving from said point subsequent to passing through the lens system, and is intended to detect when the transmitted light is focused on the surface of said object, **characterized** in that the light source (40) and the focus detecting means (15) are included in a detector unit (61); in that an optical unit (81, 82) which is small and light in weight in relation to the lens system (7) is arranged for movement in a direction towards and away from the objective (8) of said lens system, said unit thereby functioning to change the distance of the focus point from said objective; and in that a measuring means (16), such as a scale, is provided for measuring the position of the movable optical unit (81; 82) in relation to the lens system (7) when the focus detecting means (15) detects that the transmitted light is focused on the surface of the measurement object, said position constituting a measurement of the distance (c) between said point (13) on the measurement object and the objective (8).

2. A probe according to Claim 1, **characterized** in that the movable unit comprises at least the focus detecting means (15).

3. A probe according to Claim 1, **characterized** in that the movable unit (81; 82) includes a collimating optical element (69); and in that the detector unit (61) is placed in the path of the collimated beam, downstream of the movable unit (81; 82).

4. A probe according to Claim 1, 2 or 3, **characterized** in that the beam path includes a grating (17) which functions to split light incident from the measurement object into two or more light fields (18, 19); and in that one or more lenses (21, 22; 65) are provided for focusing the light fields (18, 19) onto the focus detecting means (15).

5. A probe according to Claim 4, **characterized** in that the lens system (17) includes lens elements (20, 21; 69, 65) between which said grating (17) is positioned in a collimated light field.

6. A probe according to Claim 4 or 5, **characterized** in that one lens element (22) of the lens system (7) located nearest the detector unit (61) has a focal distance such that subsequent to defraction in the lens element (22) the respective focuses of respective light fields (18, 19) will lie at a constant distance from the optical axis (23) of the lens system when mutually different distances prevail between the detector unit and the lens element.

7. A probe according to Claim 6, **characterized** in that the lens element (22) has a focal distance which corresponds to the distance between the lens element and the grating (17).

8. A probe according to Claim 1, 3, 4 or 5, **characterized** in that the detector unit (61) includes a beam splitter (62) which functions to separate incoming light from outgoing light and includes a collimated light source (63) having a light transmitting element (40) and a focusing lens (7, 65); and in that said grating is positioned between the beam splitter and the focus detecting means (15).

9. A probe according to Claim 1, 3, 4 or 5, **characterized** in that said grating (17) is positioned in the detector unit (61) between a focusing element (65) operative to focus incident light onto the focus detecting means (15) and the movable optical unit (82), said unit being positioned between the detector unit (61) and said objective (8).

10. A contactless detector according to Claim 1, 2, 3, 4, 5, 6, 7, 8 or 9, **characterized** in that the focusing detecting means (15) includes a light sensitive element (41, 42) for each of said light fields (18, 19); and in that a first (41) of said light sensitive elements is positioned closer to the objective (8) than said light source (40); and in that a second (42) of the light sensitive elements is placed correspondingly further from the objective (8).

11. A probe according to Claim 10, **characterized** in that each of the light sensitive elements (41, 42) is intended to produce a respective electric signal; and in that an electronic circuit (F) is provided for calculating the difference signal divided by the summation signal, which expression constitutes a measurement of the deviation between the true position of the movable unit (81; 82) and the position at which the light sensitive elements receive mutually the same amount of light.

12. A probe according to any one of Claims 1-7 or Claims 9-11, **characterized** in that the light transmitting elements (40) of the detector unit comprise optical fibres.

13. A probe according to any one of Claims 1-7 or Claims 9-12, **characterized** in that the light transmitting (40) elements (41, 42) of the detector unit comprise one or more discrete or integrated semiconductor elements.

14. A probe according to any one of the preceding Claims, **characterized** in that the light receiving elements (41, 42) of the focus detecting means (40) comprise optical fibres.

15. A probe according to any one of the preceding Claims, **characterized** in that the light receiving elements (41, 42) of the focus detecting means comprise one or more discrete or integrated semiconductor elements.

16. A probe according to any one of the preceding Claims, **characterized** in that the light source produces laser light.

17. A probe according to any one of the preceding Claims, **characterized** in that one or more focus detecting means are placed radially outside the focus detecting means that is positioned symmetrically with respect to the optical axis, wherein two or smore focus detecting means are provided, where each detects one point on the measurement object.

18. A probe according to any one of the preceding Claims, **characterized** in that one or more of the optical elements is of the holographic type.

## Fig. 1

## Fig. 2

## Fig. 3

Fig. 4a

Fig. 4b

Fig. 4c

Fig. 5a

Fig. 5b

Fig. 5c

Fig. 8

Fig. 6

Fig. 7